# EUROPÄISCHE PATENTSCHRIFT

(11) **EP 1 438 810 B1**
(45) Veröffentlichungstag und Bekanntmachung des Hinweises auf die Patenterteilung: **23.07.2008**
(21) Anmeldenummer: 02783011.6
(22) Anmeldetag: 25.10.2002
(51) Int. Cl.: H04L 12/40

(54) **VERFAHREN ZUR STEUERUNG MEHRERER VERNETZTER EINHEITEN SOWIE NETZWERK AUS MEHREREN EINHEITEN**
METHOD FOR CONTROLLING A PLURALITY OF NETWORKED UNITS AND NETWORK COMPRISING A PLURALITY OF UNITS
PROCEDE POUR COMMANDER PLUSIEURS UNITES MISES EN RESEAU ET RESEAU FORME DE PLUSIEURS UNITES

(30) Priorität: 26.10.2001 DE 10152324
(43) Veröffentlichungstag der Anmeldung: 21.07.2004
(73) Patentinhaber: Harman Becker Automotive Systems GmbH, 76307 Karlsbad (DE)
(72) Erfinder: SCHÖPP, Harald, 76275 Ettlingen (DE)
(74) Vertreter: Schmuckermaier, Bernhard
(86) Internationale Anmeldenummer: PCT/EP2002/011956
(87) Internationale Veröffentlichungsnummer: WO 2003/036877

(56) Entgegenhaltungen:
- EP-A- 0 305 265
- EP-A- 1 050 995
- WO-A-03/028305
- DE-C- 19 837 242

## Beschreibung

Verfahren zur Steuerung mehrerer in einem Netzwerk miteinander vernetzten Einheiten sowie Netzwerk aus mehreren miteinander vernetzten Einheiten Die Erfindung betrifft ein Verfahren zur Steuerung mehrerer in einem Netzwerk über einen Datenbus miteinander vernetzten Ein- heiten.

Die Erfindung betrifft weiter ein Netzwerk aus mehreren über einen Datenbus miteinander vernetzten Einheiten.

Für den Einbau in Fahrzeuge gibt es unterschiedliche Vernetzungskonzepte, welche verteilte Systemfunktionen von Multimediasystemen miteinander verbinden, wie z. B. das sog. MOST-Netzwerk, das mehrere Einheiten, wie z. B. Rundfunkempfänger, CD-Spieler, DVD-Spieler, Kassettengerät, Navigationsgerät, Funktelefon, Fernsehgerät, Bildschirm, Audioanlage, um nur einige der zahlreichen Beispiele zu nennen, über einen elektrischen oder optischen Datenbus miteinander vernetzt.

MOST, das als Abkürzung für Media Oriented System Transport oder Media Oriented Synchronous Transfer steht, ist die Bezeichnung für einMultimedianetzwerk und einen Standard, die speziell für den Einsatz in Kraftfahrzeugen entwickelt wurden, jedoch nicht auf diesen Einsatzbereich beschränkt sind.

Obwohl MOST-Netzwerke sicher und zuverlässig arbeiten, isteine Erhöhung der Betriebssicherheit wünschenswert.

Es ist daher Aufgabe der Erfindung, die Leistungsfähigkeit, insbesondere die Betriebssicherheit und die Fehlerdiagnose, eines Netzwerkes aus mehreren miteinander vernetzten Einheiten zu erhöhen.

Die WO 03/02305 A2 beschreibt ein Netzwerk mit mehreren über einen CAN-Bus vernetzten Einheiten, wobei zur Erhöhung der Betriebssicherheit redundante Daten über Versorgungsleitungen übertragen werden.

Verfahrensmässig wird diese Aufgabe mit den im Anspruch 1 angegebenen Merkmalen dadurch gelöst, dass die Einheiten über die Versorgungsleitungen an eine zentrale Spannungswelle angeschlossen werden und daß die Versorgungsleitungen auch zur Datenübertragung genutzt werden.

Vorrichtungsmäßig wird diese Aufgabe mit den im Anspruch 14 angegebenen Merkmalen dadurch gelöst, daß die Einheiten über Versorgungsleitungen an eine zentrale Spannungsquelle angeschlossen sind, und daß die Versorgungsleitungen auch zur Datenübertragung einsetzbar sind.

Durch die.erfindungsgemäße Maßnahme, die Versorgungsleitungen zur Spannungsversorgung auch zur Datenübertragung einzusetzen, wird die Betriebssicherheit des erfindungsgemäßen Netzwerkes beträchtlich erhöht.

Ein Ausführungsbeispiel der Erfindung sieht vor, daß die Versorgungsleitungen nur dann zur Datenübertragung genutzt werden, wenn Fehler bei der Datenübertragung auf dem Datenbus auftreten. Über die Versorgungsleitungen werden im Fehlerfall Diagnosedaten zur Fehlerdiagnose zu den einzelnen Einheiten übertragen.

Ein weiteres Ausführungsbeispiel, das vorzugsweise mit dem vorangehenden kombiniert wird, sieht vor, daß über die Versorgungsleitungen Daten für ein Up-date zu den einzelnen Einheiten des Netzwerkes übertragen werden.

Bei einem weiteren Ausführungsbeispiel der Erfindung lassen sich die im Netzwerk miteinander vernetzten Einheiten über die Versorgungsleitungen ansteuern.

Beispielsweise läßt sich das Netzwerk über die Versorgungsleitungen an ein zweites Netzwerk anschließen.

Für den Datenbus kann z. B. ein Koaxialkabel oder ein optisches Kabel vorgesehen sein.

Die Datenrate auf den Versorgungsleitungen ist beispielsweise geringer gewählt als auf dem Datenbus.

Besonders vorteilhaft ist es, die zentrale Spannungsquelle als intelligente Reglereinheit zu gestalten, die selbst aktiv an der Datenkommunikation über die Versorgungsleitungen teilnimmt. Es werden beispielsweise Informationen über den Status des Bordnetzes zu den Einheiten des Netzwerkes übertragen. Ein sogenanntes intelligentes Power-Management, das die Belastung des Bordnetzes eines Fahrzeugs steuert, kann implementiert werden.

Vorzugsweise sind im erfindungsgemäßen Netzwerk eine Mastereinheit und mehrere Slaveeinheiten miteinander vernetzt.

Das Netzwerk kann z. B. als MOST-, D2B- oder IEEE1394-Netzwerk ausgebildet sein.

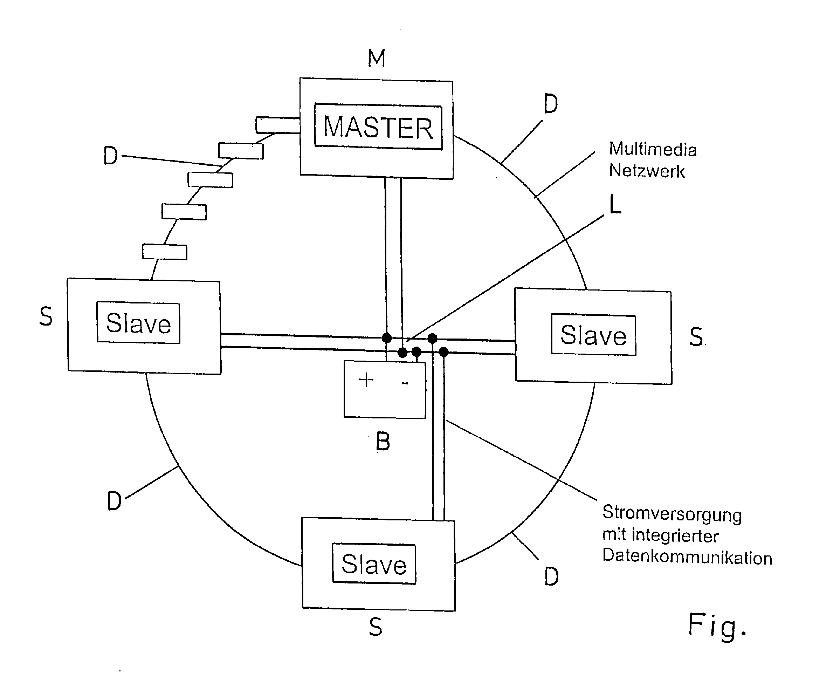

Die Erfindung wird anhand der Figur nun näher beschrieben und erläutert.

In der Figur sind mehrere Einheiten - eine Mastereinheit M sowie mehrere Slaveeinheiten S - über einen z. B. optischen Datenbus D miteinander vernetzt. Das Netzwerk ist beispielsweise als MOST-Netzwerk ausgebildet und in einem Kraftfahrzeug installiert. Die Mastereinheit M und die Slaveeinheiten S sind über Versorgungsleitungen L an die Autobatterie B angeschlossen. Weil alle Einheiten M und S an eine zentrale Spannungsquelle, die Autobatterie, angeschlossen sind, sind sie über die Versorgungsleitungen L ebenfalls untereinander vollständig vernetzt. Das Versorgungsleitungssystem stellt daher ein zweites Netzwerk dar, über welches ebenfalls Daten zu den einzelnen und zwischen den einzelnen Einheiten M und S übertragbar sind.

Wie bereits erwähnt, kann das Netzwerk aus den Versorgungsleitungen nur bei Fehlern bei der Datenübertragung auf dem Datenbus genutzt werden. Es kann z. B. aber auch zur Übertragung von Up-date-Daten für ein Up-date der einzelnen Einheiten M und S genutzt werden. Außerdem läßt sich an das Netzwerk aus den Verbindungsleitungen L ein weiteres Netzwerk anschließen. Die Datenrate auf den Versorgungsleitungen ist beispielsweise geringer gewählt als auf dem Datenbus. Vorzugsweise ist die zentrale Spannungsquelle als intelligente Reglereinheit ausgebildet, die in die Datenkommunikation über die Versorgungsleitungen mit einbezogen ist, so dass z.B. Informationen über den Status des Bordnetzes eines Fahrzeugs zu den einzelnen im Netzwerk miteinander vernetzten Einheiten übertragbar sind. Durch Implementierung eines sogenannten Power-Managements läßt sich die Belastung des Bordnetzes steuern.

Das erfindungsgemäße Verfahren und das erfindungsgemäße Netzwerk sind besonders für den Einsatz in einem Kraftfahrzeug geeignet, weil das Versorgungsleitungsnetz ohnehin vorhanden ist und aus diesem Grund keine zusätzlichen Kupferkabel verlegt werden müssen.

Bezugszeichenliste
- B: Batterie
- D: Datenbus
- L: Versorgungsleitung
- M: Mastereinheit
- S: Slaveeinheit

## Patentansprüche

1. Verfahren zur Steuerung mehrerer in einem Netzwerk über einen Datenbus (D) miteinander vernetzter Einheiten (M, S), die über an eine zentrale Spannungsquelle (B) angeschlossenen Versorgungsleitungen (L) mit Spannung versorgt werden, **dadurch gekennzeichnet, daß** die Versorgungsleitungen (L) auch zur Datenübertragung genutzt werden und daß Daten in einem ringförmigen Netzwerk übertragen werden.

2. Verfahren nach Anspruch 1,
**dadurch gekennzeichnet, daß** nur bei der Datenübertragung auf dem Datenbus (D) auftretenden Fehlern Daten über die Versorgungsleitungen (L) übertragen werden.

3. Verfahren nach Anspruch 2,
**dadurch gekennzeichnet, daß** über die Versorgungsleitungen (L) Diagnosedaten zur Fehlerdiagnose übertragen werden.

4. Verfahren nach Anspruch 1,
**dadurch gekennzeichnet, daß** über die Versorgungsleitungen (L) Daten für ein Up-date zu den einzelnen Einheiten (M, S) des Netzwerkes übertragen werden.

5. Verfahren nach Anspruch 1 oder 4,
**dadurch gekennzeichnet, daß** die Einheiten (M, S) über die Versorgungsleitungen (L) angesteuert werden.

6. Verfahren nach einem der Ansprüche 1 bis 5,
**dadurch gekennzeichnet, daß** über die Versorgungsleitungen (L) des Netzwerkes Daten in ein weiteres Netzwerk übertragen werden.

7. Verfahren nach einem der Ansprüche 1 bis 6,
**dadurch gekennzeichnet, daß** zur Datenübertragung ein optischer Datenbus verwendet wird.

8. Verfahren nach einem der Ansprüche 1 bis 7,
**dadurch gekennzeichnet, daß** im Netzwerk Daten von einer Mastereinheit (M) zu mehreren Slaveeinheiten (S) übertragen werden.

9. Verfahren nach einem der Ansprüche 1 bis 8,
**dadurch gekennzeichnet, daß** zur Datenübertragung ein MOST-, ein D2B- oder ein IEEE1394-Netzwerk verwendet wird.

10. Verfahren nach einem der Ansprüche 1 bis 9,
**dadurch gekennzeichnet, daß** das Verfahren in einem Fahrzeug verwendet wird.

11. Verfahren nach Anspruch 10,
**dadurch gekennzeichnet, daß** die Einheiten (M, S) von einer Bordbatterie mit Spannung versorgt werden.

12. Verfahren nach einem der vorangehenden Ansprüche,
**dadurch gekennzeichnet, daß** die zentrale Spannungsquelle (B) als intelligente Reglereinheit ausgeführt wird, die an der Datenkommunikation über die Versorgungsleitungen (L) teilnimmt.

13. Verfahren nach einem der vorangehenden Ansprüche,
**dadurch gekennzeichnet, daß** die Belastung der zentralen Spannungsquelle (B) gesteuert wird.

14. Netzwerk aus mehreren über einen Datenbus (D) miteinander vernetzten Einheiten (M, S), wobei die Einheiten (M, S) über Versorgungsleitungen (L) an eine zentrale Spannungsquelle (3) angeschlossen sind **dadurch gekennzeichnet, daß** die Versorgungsleitungen (L) auch zur Datenübertragung einsetzbar sind und
daß das Netzwerk ringförmig gestaltet ist.

15. Netzwerk nach Anspruch 14,
**dadurch gekennzeichnet, daß** nur bei der Datenübertragung auf dem Datenbus (D) auftretenden Fehlern Daten über die Versorgungsleitungen (L) übertrag bar sind.

16. Verfahren nach Anspruch 15,
**dadurch gekennzeichnet, daß** über die Versorgungsleitungen (L) Diagnoseraten zur Fehlerdiagnose übertragbar sind.

17. Netzwerk nach Anspruch 14,
**dadurch gekennzeichnet, daß** über die Versorgungsleitungen (L) Daten für ein Up-date zu den einzelnen Einheiten (M, S) des Netzwerkes übertragbar sind.

18. Netzwerk nach Anspruch 14 oder 17,
**dadurch gekennzeichnet, daß** die Einheiten (M, S) über die Versorgungsleitungen (L) ansteuerbar sind.

19. Netzwerk nach einem der Ansprüche 14 bis 18,
**dadurch gekennzeichnet, daß** das Netz werk über die Versorgungsleitungen (L) an ein weiteres Netzwerk anschließbar ist.

20. Netzwerk nach einem der Ansprüche 14 bis 19,
**dadurch gekennzeichnet, daß** der Datenbus (D) ein optischer Bus ist.

21. Netzwerk nach einem der Ansprüche 14 bis 20,
**dadurch gekennzeichnet, daß** im Netz werk eine Mastereinheit (M) und mehrere Slaveeinheiten (S) miteinander vernetzt sind.

22. Netzwerk nach einem der Ansprüche 14 bis 21,
**dadurch gekennzeichnet, daß** das Netz werk ein MOST-, ein D2B- oder ein IEEE1394- Netzwerk ist.

23. Netzwerk nach einem der Ansprüche 14 bis 22,
**dadurch gekennzeichnet, daß** das Netz werk für den Einbau in ein Fahrzeug vorgesehen ist.

24. Netzwerk nach Anspruch 23,
**dadurch gekennzeichnet, daß** die zentrale Spannungsquelle die Bordbatterie (B) des Fahrzeuges ist.

25. Netzwerk nach einem der Ansprüche 14 bis 23,
**dadurch gekennzeichnet, daß** die zentrale Spannungsquelle (B) als intelligente Reglereinheit ausgebildet ist, die an die Datenkommunikation über die Versorgungsleitungen (L) angeschlossen ist.

26. Netzwerk nach einem der nach Ansprüche 14 bis 25,
**dadurch gekennzeichnet, daß** die Belastung der zentralen Spannungsquelle (B) steuerbar ist.

27. Verfahren nach einem der Ansprüche 1 bis 13,
**dadurch gekennzeichnet, daß** die Datenrate auf den Versorgungsleitungen (L) geringer gewählt wird als auf dem Datenbus (D).

## Claims

1. A method of controlling a plurality of units (M, S), which are networked together in a network via a data bus (D), which units are supplied with voltage via supply lines connected to a central voltage source (B), **characterised in that** the supply lines (L) are also used for data transmission and that data is transmitted in a ring network.

2. A method as claimed in Claim 1, **characterised in that** only errors occurring during data transfer on the data bus (D) are transmitted via the supply lines (L).

3. A method as claimed in Claim 2, **characterised in that** diagnostic data for error diagnosis is transmitted via the supply lines (L).

4. A method as claimed in Claim 1, **characterised in that** data for an update to the individual units (M, S) of the network is transmitted via the supply lines (L).

5. A method as claimed in Claim 1 or 4, **characterised in that** the units (M, S) are controlled via the supply lines (L).

6. A method as claimed in one of Claims 1 to 5, **characterised in that** data is transmitted into a further network via the supply lines (L) of the network.

7. A method as claimed in one of Claims 1 to 6, **characterised in that** an optical data bus is used for the data transmission.

8. A method as claimed in one of Claims 1 to 7, **characterised in that** data is transmitted in the network from a master unit (M) to a plurality of slave units (S).

9. A method as claimed in one of Claims 1 to 8, **characterised in that** an MOST, D2B or IEEE1394 network is used for the data transmission.

10. A method as claimed in one of Claims 1 to 9, **characterised in that** the method is used in a vehicle.

11. A method as claimed in Claim 10, **characterised in that** the units (M, S) are supplied with voltage by an onboard battery.

12. A method as claimed in one of the preceding claims, **characterised in that** the central voltage source (B) is constructed in the form of an intelligent control unit, which takes part in the data communication via the supply lines (L).

13. A method as claimed in one of the preceding claims, **characterised in that** the load on the central voltage source (B) is controlled.

14. A network comprising a plurality of units (M, S) networked together via a data bus (D), wherein the units (M, S) are connected via supply lines (L) to a central voltage source (3), **characterised in that** the supply lines (L) are also usable for data transmission and that the network is of ring shape.

15. A network as claimed in Claim 14, **characterised in that** data is transmissible via the supply lines (L) only when errors occur on the data bus (D) during data transmission.

16. A network as claimed in Claim 15, **characterised in that** diagnostic data is transmissible via the supply lines (L) for the purpose of error diagnosis.

17. A network as claimed in Claim 14, **characterised in that** data is transmissible via the supply lines (L) for an update to the individual units (M, S) of the network.

18. A network as claimed in Claim 14 or 17, **characterised in that** the units (M, S) are controllable via the supply lines (L).

19. A network as claimed in one of Claims 14 to 18, **characterised in that** the network is connectable via the supply lines (L) to a further network.

20. A network as claimed in one of Claims 14 to 19, **characterised in that** the data bus (D) is an optical bus.

21. A network as claimed in one of Claims 14 to 20, **characterised in that** a master unit (M) and a plurality of slave units (S) may be networked together in the network.

22. A network as claimed in one of Claims 14 to 21, **characterised in that** the network is an MOST, D2B or IEEE1394 network.

23. A network as claimed in one of Claims 14 to 22, **characterised in that** the network is provided for installation into a vehicle.

24. A network as claimed in Claim 23, **characterised in that** the central voltage source is the onboard battery (B) of the vehicle.

25. A network as claimed in one of Claims 14 to 23, **characterised in that** the central voltage source (B) is in the form of an intelligent control unit, which is connected to the data communication via the supply lines (L).

26. A network as claimed in one of Claims 14 to 25, **characterised in that** the load on the central voltage source (B) is controllable.

27. A method as claimed in one of Claims 1 to 13, **characterised in that** the data rate on the supply lines (L) is selected to be smaller than on the data bus (D).

## Revendications

1. Procédé pour la commande de plusieurs unités (M, S) mises en réseau les unes avec les autres par l'intermédiaire d'un bus de données (D), qui sont alimentées en tension par l'intermédiaire de lignes d'alimentation (L) raccordées à une source de tension centrale (B), **caractérisé en ce que** les lignes d'alimentation (L) sont également utilisées pour le transfert de données et **en ce que** les données sont transférées dans un réseau annulaire.

2. Procédé selon la revendication 1,
**caractérisé en ce que** les données ne sont transférées par l'intermédiaire des lignes d'alimentation (L) qu'en cas d'erreurs apparaissant lors du transfert de données sur le bus de données (D).

3. Procédé selon la revendication 2,
**caractérisé en ce que** des données de diagnostic pour le diagnostic d'erreurs sont transférées par l'intermédiaire des lignes d'alimentation (L).

4. Procédé selon la revendication 1,
**caractérisé en ce que** des données pour une mise à jour sont transférées aux différentes unités (M, S) du réseau par l'intermédiaire des lignes d'alimentation (L).

5. Procédé selon la revendication 1 ou 4,
**caractérisé en ce que** les unités (M, S) sont commandées par l'intermédiaire des lignes d'alimentation (L).

6. Procédé selon l'une quelconque des revendications 1 à 5,
**caractérisé en ce que** des données sont transférées dans un autre réseau par l'intermédiaire des lignes d'alimentation (L) du réseau.

7. Procédé selon l'une quelconque des revendications 1 à 6,
**caractérisé en ce qu'**un bus de données optique est utilisé pour le transfert de données.

8. Procédé selon l'une quelconque des revendications 1 à 7,
**caractérisé en ce que** des données sont transférées entre une unité maître (M) et plusieurs unités esclaves (S) dans le réseau.

9. Procédé selon l'une quelconque des revendications 1 à 8,
**caractérisé en ce qu'**un réseau MOST, un réseau D2B ou un réseau IEEE1394 est utilisé pour le transfert de données.

10. Procédé selon l'une quelconque des revendications 1 à 9,
**caractérisé en ce que** le procédé est utilisé dans un véhicule automobile.

11. Procédé selon la revendication 10,
**caractérisé en ce que** les unités (M, S) sont alimentées en tension par une batterie de bord.

12. Procédé selon l'une quelconque des revendications précédentes,
**caractérisé en ce que** la source de tension centrale (B) est réalisée sous forme d'unité de régulation intelligente qui participe à la communication de données par l'intermédiaire des lignes d'alimentation (L).

13. Procédé selon l'une quelconque des revendications précédentes,
**caractérisé en ce que** la charge de la source de tension centrale (B) est commandée.

14. Réseau constitué de plusieurs unités (M, S) mises en réseau les unes avec les autres par l'intermédiaire d'un bus de données (D), dans lequel les unités (M, S) sont raccordées à une source de tension centrale (B) par l'intermédiaire de lignes d'alimentation (L), **caractérisé en ce que** les lignes d'alimentation (L) peuvent être également utilisées pour le transfert de données et **en ce que** le réseau est réalisé sous forme annulaire.

15. Réseau selon la revendication 14,
**caractérisé en ce que** les données ne peuvent être transférées par l'intermédiaire des lignes d'alimentation (L) qu'en cas d'erreurs apparaissant lors du transfert de données sur le bus de données (D).

16. Réseau selon la revendication 15,
**caractérisé en ce que** des données de diagnostic pour le diagnostic d'erreurs peuvent être transférées par l'intermédiaire des lignes d'alimentation (L).

17. Réseau selon la revendication 14,
**caractérisé en ce que** des données pour une mise à jour peuvent être transférées aux différentes unités (M, S) du réseau par l'intermédiaire des lignes d'alimentation (L).

18. Réseau selon la revendication 14 ou 17,
**caractérisé en ce que** les unités (M, S) peuvent être commandées par l'intermédiaire des lignes d'alimentation (L).

19. Réseau selon l'une quelconque des revendications 14 à 18,
**caractérisé en ce que** le réseau peut être raccordé à un autre réseau par l'intermédiaire des lignes d'alimentation (L).

20. Réseau selon l'une quelconque des revendications 14 à 19,
**caractérisé en ce que** le bus de données (D) est un bus optique.

21. Réseau selon l'une quelconque des revendications 14 à 20,
**caractérisé en ce qu'**une unité maître (M) et plusieurs unités esclaves (S) sont mises en réseau les unes avec les autres dans le réseau.

22. Réseau selon l'une quelconque des revendications 14 à 21,
**caractérisé en ce que** le réseau est un réseau MOST, un réseau D2B ou un réseau IEEE1394.

23. Réseau selon l'une quelconque des revendications 14 à 22,
**caractérisé en ce que** le réseau est prévu pour être installé dans un véhicule automobile.

24. Réseau selon la revendication 23,
**caractérisé en ce que** la source de tension centrale est la batterie de bord (B) du véhicule automobile.

25. Réseau selon l'une quelconque des revendications 14 à 23,
**caractérisé en ce que** la source de tension centrale (B) est réalisée sous forme d'unité de régulation intelligente qui est raccordée à la communication de données par l'intermédiaire des lignes d'alimentation (L).

26. Réseau selon l'une quelconque des revendications 14 à 25,
**caractérisé en ce que** la charge de la source de tension centrale (B) peut être commandée.

27. Procédé selon l'une quelconque des revendications 1 à 13,
**caractérisé en ce que** le débit de données sur les lignes d'alimentation (L) est choisi pour être plus faible que celui sur le bus de données (D).
